Europäisches Patentamt

European Patent Office

Office européen des brevets

(19)

(11) Publication number : **0 481 924 A1**

# (12) EUROPEAN PATENT APPLICATION

(21) Application number : **91830322.3**

(22) Date of filing : **23.07.91**

(51) Int. Cl.⁵ : **F16K 27/12, F16K 3/00**

(30) Priority : **17.10.90 IT 4253490**

(43) Date of publication of application :
**22.04.92 Bulletin 92/17**

(84) Designated Contracting States :
**AT BE CH DE DK ES FR GB GR LI LU NL SE**

(71) Applicant : **Bonatti, Giorgio**
**Via Zara e Zanchi, 6**
**I-43039 Salsomaggiore Terme (Parma) (IT)**

(72) Inventor : **Bonatti, Giorgio**
**Via Zara e Zanchi, 6**
**I-43039 Salsomaggiore Terme (Parma) (IT)**

(74) Representative : **Lanzoni, Luciano**
**BUGNION S.p.A. Via Emilia Est, 25**
**I-41100 Modena (IT)**

(54) **A system for securing the bonnet of a hydraulic gate valve.**

(57) In a gate valve of which the uppermost part of the body (2) is substantially elliptical or oval in cross section, or at all events of geometry having a longer axis (15) and a shorter axis (16), the bonnet comprises a threaded nut (6), a bridging piece (7) positively engaging the inside walls of the body (2), and a clamp plate (9) which is forced against or distanced from the top inside surface of the body simply by tightening or loosening the nut ; in service, advantageously, the mechanical sealing action is favoured by the hydraulic pressure of the fluid.

fig.1

EP 0 481 924 A1

The present invention relates to a system by neams of which to secure the bonnet of a gate valve. In conventional valves, a threaded stem inserted into the valve body brings about the movement of an element serving to shut off the flow of liquid through a pipeline on which the valve is installed. Gate valves exhibit a body generally of cylindrical or oval shape, of which one end is integral with a length of flanged or splayed pipe matched to the flanges or spigots of the pipeline.

Such a valve further comprises a flanged bonnet, affording a central hole to accommodate the stem and secured to the flanged end of the body with a plurality of bolts, thus ensuring a tight seal. Each time the body of valve needs to be exposed for servicing or repair operations, the bolts securing the bonnet must all be removed.

In other designs, for example as disposed in EP patent application n° 0 314 823 relating to gate valves of substantially elliptical embodiment, the bonnet is secured by tightening a nut against an internal clamp element which lifts and locks into the uppermost part of the valve body.

A further sealing element, lodged between the clamp element and the nut, is caused to expand against the valve body when the nut is tightened and thus romain forcibly compressed between the nut and the body, sealing the top part of the valve.

This particular design betrays difficulties in the construction of the clamp element, however, more especially in valves of large dimensions, as the element in question has to withstand the thrust of the pressurized fluid, particularly at its ends of greater section; in effect, a minimum of deflection or bending can result in leaks occurring.

In addition, the clamp nut needs to be of generous proportions to ensure that the force applied is sufficient to counteract the internal pressure of the fluid.

The object of the invention is to overcome the drawbacks outlined above, in particular by avoiding the use of bolts and instead adopting a simple and swift system of securing and releasing the bonnet of a gate valve, which features a more economic and functional design, uncomplicated in construction and able to ensure the mechanical and hydraulic integrity of the bonnet and seal assembly.

An additional object of the invention is to exploit the pressure of the fluid internally of the valve to favour a tight seal at the top end of the valve body, and thus to dispense with the need for clamp nuts of large dimensions.

The stated objects are fully realizes in a system according to the invention for securing the bonnet of a hydraulic gate valve of the type comprising:
– a threaded stem inserted into and coaxial with the body of the valve;
– a length of pipe embodiment intergrally with the body of the valve, and flanged or splayed to enable its connection into a hydraulic pipeline;
– a threaded valve element capable of translational movement along the axis of the stem, brought about by rotation of the stem, and serving to shut off the flow of a liquid through the length of pipe, characterized in that it comprises a bridging element, designed to lodge in the body of the valve by rotating about the centre axis of the valve and removable from the body together with the stem and the threaded valve element to the end of exposing the interior of the valve; a clamp element designed to engage the body of the valve internally in fluid tight contact; and a threaded nut, screw-coupled with the clamp element in such a way that the clamp element can be either tightened against the body, or released to the end of exposing the interior of the valve.

The invention will now be described in detail, by way of example, with the aid of the accompanying drawings, in which:

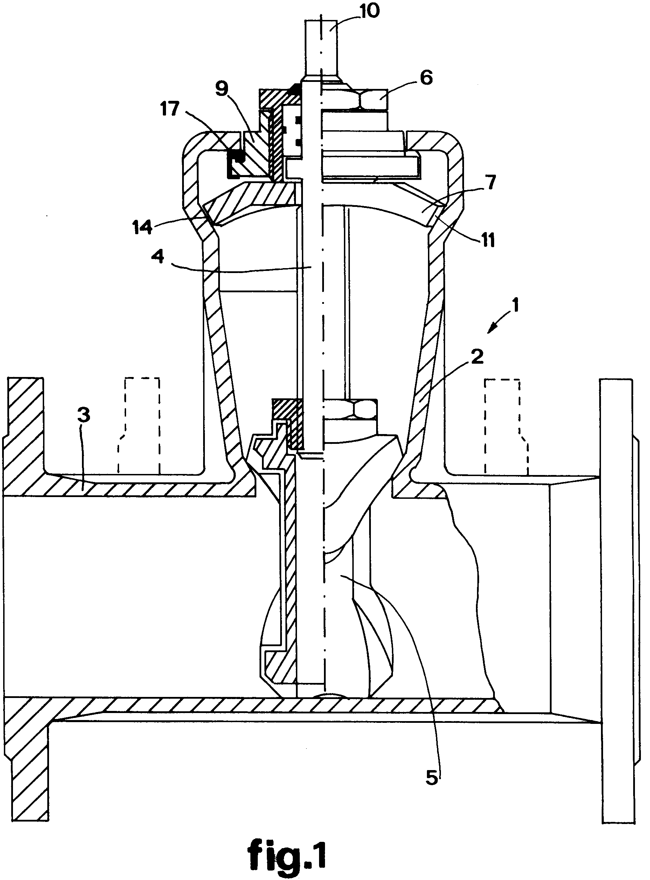

– fig 1 shows a gate valve according to the present invention, viewed in section along its centre axis;
– fig 2 shows the gate valve of fig 1 in a view from above which illustrates its substantially elliptical section;

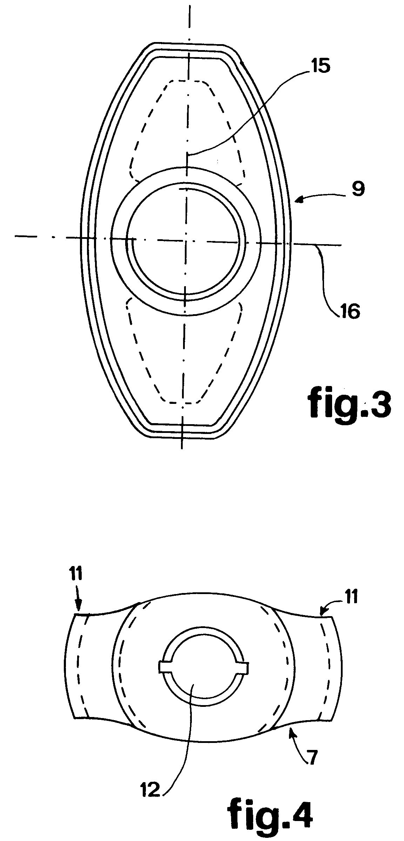

– figs 3 and 4 are respective illustrations of the clamp element and the bridging element, viewed in plan.

Referring to the drawings, 1 denotes a hydraulic gate valve, comprising a body 2, and a threaded stem 4 inserted into the body along the central axis of the valve and serving to operate a gate element 5 capable of translational movement along the axis of the stem 4.

The body 2 is embodied integrally at one end with a length of pipe 3, flanged or splayed in such a way as to enable connection into a hydraulic pipeline (not illustrated).

The remaining end of the valve body is enclosed in a fluid-tight fit by a clamp element 9, a bridging element 7 and a hollow threaded nut 6 which combine to constitute the bonnet of the valve.

The bridging element 7 is substantially elliptical in shape and exhibits a pair of tongues 11 at the opposite ends, designed to locate in corresponding recesses 14 afforded by the iternal side walls of the valve body 2.

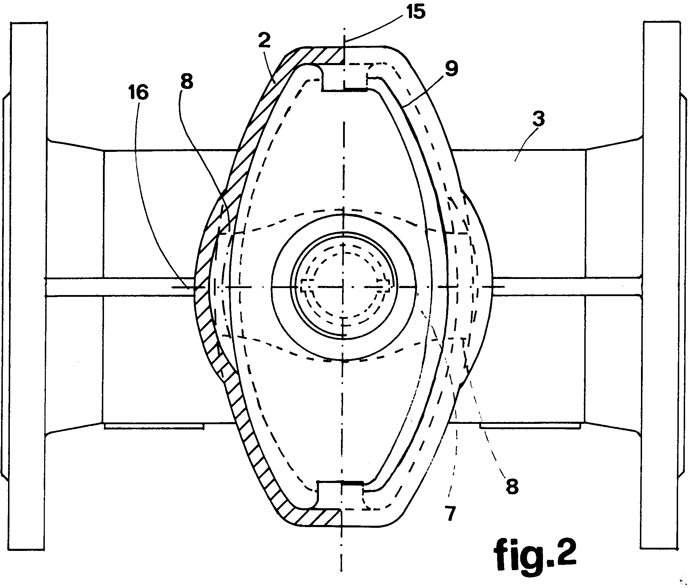

12 denotes a central hole in the bridging element 7 which affords passage to the stem 4 and allows the element 7 to be rotated about the stem to the point of striking against a pair of stops 8 symmetrically disposed on either side of the centre axis of the valve body 2 and projecting inwards, as illustrated in fig 2.

The clamp element 9 exhibits a shape substantially of barrel-like outline when viewed in a transverse plane perpendicular to the stem 4, with a central hole affording passage to the stem, and is designed to locate forcibly against the uppermost part of the body 2, thereby creating a hermetic enclosure with the assistance of a seal denoted 17.

More exactly, the centre hole afforted by the clamp element 9 is threaded and screw-coupled with the nut 6 in such a way that the nut, bearing on the bridging element 7, causes the clamp element 9 to rise and seal the valve chamber from inside.

When the nut 6 is tightened, the bridging element 7 is forced down and locked against the recesses 14 formed in the inside walls of the valve body, thus affording the necessary bearing surface against which to turn the nut.

The system thus described is favoured additionally by the effect of fluid pressure impinging on the clamp element in the sealing direction, from within the chamber; this added hydraulic pressure greatly facilitates construction both of the clamp element (which is subject to no bending stresses from the pressure of the fluid) and of the nut (which can be scaled down in size).

Accordingly, the systen according to the invention is applicable also to larger side valves.

In normal service, the flow of liquid through the length of pipe 3 can be shut off by rotation of a handwheel (not illustrated) rigidly associated with the bonnet and 10 of the stem, in such a way as to lower the gate 5.

The uppermost part of the valve body 2, viewed in a transverse plane perpendicular to the stem 4 and coinciding at least with the bonnet, is essentially elliptical or oval in section, or at all events of geometry determined by a longer axis denoted 15 and a shorter axis 16, as illustrated in fig 2.

In practice, therefore, the bridging element 7 is of shape such that it will lodge in the valve body when the tongues 11 are aligned along the shorter axis 16, and can be removed from the valve when the tongues are aligned along the longer axis 15 and occupying the wider puart of the body.

In the event that servicing or repair operations should necessitate exposing the interior of the valve, it suffices to loosen the nut 6 and thus free the clamp element 9 and the bridging element 7 whereupon the bridging element can be rotated 90° anticlockwise (as viewed in fig 2) about the valve stem and withdrawn. In effect, the particular shape of the valve body enables the stem, clamp element, bridging element and gate to be removed instantly.

To return the valve to normal service, the same parts are simply replaced, and the bridging element rotated 90° clockwise.

## Claims

1) A system for securing the bonnet of a hydraulic gate valve (1) of the type comprising:

– a threaded stem (4) inserted into and coaxial with the body (2) of the valve;
– a length of pipe (3) embodied integrally with the body of the valve, end flanged or splayed to enable its connection into a hydraulic pipeline;
– a threaded valve element (5) capable of translational movement along the axis of the stem (4), brought about by rotation of the stem, a serving to shut of the flow of a liquid through the length of pipe,
characterized
in that it further comprising:
– a bridging element (7), designed to lodge in the body (2) of the valve by rotating about the central axis of the valve, and removable from the body together with the stem (4) and the treaded valve element (5) to the end of exposing the interior of the valve;
– a clamp element (9) designed to engage the body of the valve internally in fluid-tight contact; and
– a threaded nut (6), screw-coupled with the clamp element (9) in such a way that the clamp element can be either tightened against the body (2), or released to the end of exposing the interior of the valve.

2) A system as in claim 1, wherein the nut (6) is coupled with the clamp element (9) in such a way that tightening the nut has the effect of forcing the bridging element (7) against recesses (14) afforded by the body (2) of the valve.

3) A system as in claim 1, wherein the clamp element (9) is threaded to receive the nut (6) and serves to render the valve fluid-tight by engaging the internal surface of the body (2) in conjunction with seals (17) when the nut (6) is tightened against the bridging element (7).

4) A system as in claim 1, wherein the nut (6), the bridging element (7) and the clamp element (9) together constitute the bonnet which by its fitment or removal serves respectively to secure or expose the corresponding part of the gate valve, and wherein the body (2) of the valve, seen in section on a transverse plane perpendicular to the stem (4) of the valve, is of shape definable as exhibiting a longer axis (15) and a shorter axis (16).

5) A system as in claim 1, wherein the bridging element (7) is substantially elliptical in shape, affording a central hole (12) to accomodate the stem (4), ans a pair of tongues (11) positioned one at either and and contoured in such a way as to lodge in corresponding recesses (14) afforted by the internal sid walls of the body, striking against a pair of stops (8) that project inward from the same internal side walls.

6) A system as in claim 1, wherein the bridging element (7) is of shape definable as exhibiting a longer axis and a shorte axis.

**fig.1**

fig.2

EP 0 481 924 A1

15

9

16

**fig.3**

11

11

12

7

**fig.4**

6

EP 0 481 924 A1

**European Patent Office**

EUROPEAN SEARCH REPORT

Application Number

| | DOCUMENTS CONSIDERED TO BE RELEVANT | | EP 91830322.3 |
|---|---|---|---|

| Category | Citation of document with indication, where appropriate, of relevant passages | Relevant to claim | CLASSIFICATION OF THE APPLICATION (Int. Cl.5) |
|---|---|---|---|
| A | DE - A - 3 737 162 (WALDENMAIER, ERHARD ERBEN SÜDDEUTSCHE ARMATURENFABR. GMBH & CO.) * Detailed description of the invention; fig. 1,2 * | 1-3 | F 16 K 27/12 F 16 K 3/00 |
| A | DE - A - 3 440 464 (BOPP & REUTHER GMBH) * Totality * | 1-3 | |
| A | US - A - 2 660 191 (VOLPIN) * Detailed description of the invention; fig. 1,6,7 * | 1-3 | |
| A | US - A - 2 610 820 (MARKEL et al.) * Detailed description of the invention; fig. 1-6 * | 1 | |
| A | US - A - 2 954 960 (DUNBAR et al.) * Fig. 1 * | | TECHNICAL FIELDS SEARCHED (Int. Cl.5) F 16 K B 65 D |
| A | US - A - 2 527 949 (MAIER et al.) * Totality * | 1 | |
| D,A | EP - A - 0 314 823 (WALDENMAIER, ERHARD ERRBEN GMBH & CO) * Detailed description of the invention; fig. 1-3 * | 1-3 | |

The present search report has been drawn up for all claims

| Place of search | Date of completion of the search | Examiner |
|---|---|---|
| VIENNA | 23-12-1991 | ROUSSARIAN |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

7